Europäisches Patentamt

European Patent Office

Office européen des brevets

(11) Veröffentlichungsnummer: **0 075 781**
**A1**

(12) **EUROPÄISCHE PATENTANMELDUNG**

(21) Anmeldenummer: 82108469.6

(51) Int. Cl.³: **C 09 D 11/00**

(22) Anmeldetag: 14.09.82

(30) Priorität: 21.09.81 DE 3137477

(43) Veröffentlichungstag der Anmeldung:
06.04.83 Patentblatt 83/14

(84) Benannte Vertragsstaaten:
BE DE FR GB NL SE

(71) Anmelder: Siemens-Elema AB
Röntgenvägen 2
S-171 95 Solna 1(SE)

(84) Benannte Vertragsstaaten:
SE

(71) Anmelder: SIEMENS AKTIENGESELLSCHAFT
Berlin und München Wittelsbacherplatz 2
D-8000 München 2(DE)

(84) Benannte Vertragsstaaten:
BE DE FR GB NL

(72) Erfinder: Nilsson, Kenth
Traelhavsvaegen 67
S-18400 Akersberga(SE)

(72) Erfinder: Gunne, Ingemar
Stationsvaegen 3
S-19170 Sollentuna(SE)

(54) Schreibflüssigkeit für einen Düsen- oder Tröpfchenschreiber.

㊍ Bei Düsen- oder Tröpfchenschreibern werden definierte Flüssigkeitsmengen, die einen Farbstoff und ein Lösungsmittel enthalten, auf einen Schriftträger aufgebracht. Um ein Zerfliessen der Flüssigkeitströpfchen in der Schriftträgerebene entscheidend zu begrenzen, ist erfindungsgemäss der Schreibflüssigkeit eine Verdünnungsflüssigkeit beigemengt, in welcher der Farbstoff unlöslich ist und die mit dem Lösungsmittel mischbar ist.

EP 0 075 781 A1

Croydon Printing Company Ltd.

0075781

SIEMENS AKTIENGESELLSCHAFT

Berlin und München

Unser Zeichen

VPA 81 P 5265 DE

Schreibflüssigkeit für einen Düsen- oder Tröpfchen-schreiber

Die vorliegende Erfindung bezieht sich auf eine Schreibflüssigkeit für einen Düsen- oder Tröpfchenschreiber, bei welchem definierte Flüssigkeitsmengen auf einen Schriftträger aufgebracht werden, die einen Farbstoff und ein Lösungsmittel enthält.

Bei Verwendung von Schreibflüssigkeiten dieser Art hat sich gezeigt, dass die einzelnen Flüssigkeitströpfchen nach dem Auftreffen auf dem Schriftträger in der Schriftträgerebene zerfliessen, also unrunde und undefinierte Farbflecken bilden. Die aus einzelnen Tröpfchen gebildeten Zeichen ergeben dann einen unscharfen, unsauberen optischen Eindruck.

Die Aufgabe vorliegender Erfindung ist es, eine Schreibflüssigkeit der eingangs genannten Art anzugeben, bei der dieser Nachteil vermieden wird und klare, randscharfe Zeichen erzielbar sind.

Gemäss der Erfindung ist dies dadurch erreicht, dass der Schreibflüssigkeit eine Verdünnungsflüssigkeit beigemengt ist, in welcher der Farbstoff unlöslich ist und die mit dem Lösungsmittel mischbar ist.

Versuche mit der erfindungsgemässen Schreibflüssigkeit haben gezeigt, dass nach dem Auftreffen der Schreibtröpfchen auf dem Schriftträger sich der Anteil der Verdünnungsflüssigkeit schneller ausbreitet als das Lösungsmittel mit dem Farbstoff; da der Farbstoff in der Verdünnungsflüssigkeit unlöslich ist, verhindert die um den

Gdl 1 TT / 9. 9. 1981

Farbtropfen ausgebreitete Verdünnungsflüssigkeit ein weiteres Ausbreiten des Farbstoffes und bewirkt somit eine relativ scharfe Eingrenzung des Farbpunktes.

Dieser gewünschte Effekt kann noch dadurch unterstützt werden, wenn man eine Verdünnungsflüssigkeit verwendet, die nicht flüchtiger ist als das Lösungsmittel. Auf diese Weise ist gewährleistet, dass der Eingrenzungseffekt der Verdünnungsflüssigkeit mindestens solange erhalten bleibt, bis das Lösungsmittel verdunstet ist und der Farbstoff unverwischbar auf dem Schriftträger haftet.

Besonders günstige Ergebnisse lassen sich erzielen, wenn als Lösungsmittel eine Flüssigkeit mit hoher Polarität und als Verdünnungsflüssigkeit eine Flüssigkeit mit niedriger Polarität verwendet werden, wie z. B. ein Ester und ein aliphatischer Kohlenwasserstoff.

Als geeignet hat sich eine Flüssigkeit erwiesen, die in 100 g Pelargonsäuremethylester als Lösungsmittel 3g von Irisol echtblau als Farbstoff enthält sowie 20g Dodecan als Verdünnungsmittel.

8 Patentansprüche

Patentansprüche

1. Schreibflüssigkeit für einen Düsen- oder Tröpfchenschreiber, bei welchem definierte Flüssigkeitsmengen auf einen Schriftträger aufgebracht werden, die einen Farbstoff und ein diesen Farbstoff lösendes Lösungsmittel enthält, d a d u r c h   g e k e n n z e i c h n e t , dass der Schreibflüssigkeit eine Verdünnungsflüssigkeit beigemengt ist, in welcher der Farbstoff unlöslich ist und die mit dem Lösungsmittel mischbar ist.

2. Schreibflüssigkeit nach Anspruch 1, d a d u r c h   g e k e n n z e i c h n e t , dass die Verdünnungs-flüssigkeit niedrigere Flüchtigkeit aufweist als das Lösungsmittel.

3. Schreibflüssigkeit nach Anspruch 1 oder 2, d a d u r c h   g e k e n n z e i c h n e t , dass ein öllöslicher Farbstoff verwendet wird.

4. Schreibflüssigkeit nach Anspruch 1 oder 2, d a d u r c h   g e k e n n z e i c h n e t , dass ein alkohollöslicher Farbstoff verwendet wird.

5. Schreibflüssigkeit nach Anspruch 1 bis 4, d a d u r c h   g e k e n n z e i c h n e t , dass als Lösungsmittel ein organisches Mittel, vorzugsweise ein Ester benutzt ist.

6. Schreibflüssigkeit nach Anspruch 5, d a d u r c h   g e k e n n z e i c h n e t , dass das Lösungsmittel ein Doppelester ist.

7. Schreibflüssigkeit nach Anspruch 1 bis 6, d a d u r c h   g e k e n n z e i c h n e t , dass ein

aliphatischer Kohlenwasserstoff als Verdünnungsflüssigkeit verwendet ist.

8. Schreibflüssigkeit nach Anspruch 1, d a d u r c h
g e k e n n z e i c h n e t , dass sie 3g von Irisol
echtblau als Farbstoff in 100g Pelargonsäuremethylester
als Lösungsmittel und 20g Dodecan als Verdünnungsmittel
enthält.

**0075781**

Nummer der Anmeldung

Europäisches Patentamt

**EUROPÄISCHER RECHERCHENBERICHT**

EP 82 10 8469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 09 D 11/00 |
| A | PATENTS ABSTRACTS OF JAPAN, Band 4, Nr. 61(C-9)(543), Seite 24C9 & JP - A - 55 27348 (CANON K.K.) 27.02.1980 | 1 | |
| | --- | | |
| A | US-A-4 153 467 (H. JANO et al.) * Ansprüche 1,6 * | 1 | |
| | ----- | | |

| | RECHERCHIERTE SACHGEBIETE (Int. Cl. 3) |
|---|---|
| | C 09 D |

Der vorliegende Recherchenbericht wurde für alle Patentansprüche erstellt.

| Recherchenort DEN HAAG | Abschlußdatum der Recherche 21-01-1983 | Prüfer DE ROECK R.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82